# EUROPÄISCHE PATENTSCHRIFT

(11) **EP 3 617 825 B1**
(45) Veröffentlichungstag und Bekanntmachung des Hinweises auf die Patenterteilung: **17.05.2023**
(21) Anmeldenummer: 18191413.6
(22) Anmeldetag: 29.08.2018
(51) Int. Cl.: G05B 23/02, G05B 19/418, G05B 19/042

(54) **AUTOMATISIERTE EVALUIERUNG VON ALARMHÄUFUNGEN**
AUTOMATED EVALUATION OF ALARM FREQUENCIES
ÉVALUATION AUTOMATIQUE DES GROUPEMENT D'ALARMES

(43) Veröffentlichungstag der Anmeldung: 04.03.2020
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- DE-A1-102016 108 197
- US-A1- 2010 156 654
- US-A1- 2013 002 697
- US-A1- 2013 099 916

## Beschreibung

Die Erfindung betrifft ein Verfahren zur Identifizierung einer Ausgangsalarmmeldung einer Alarmmeldungshäufung in einem Leitsystem einer technischen Anlage mit den Merkmalen des Anspruchs 1. Außerdem betrifft die Erfindung ein Leitsystem einer technischen Anlage gemäß Anspruch 4.

Für die Bedienung und Beobachtung technischer Anlagen durch Operatoren ist ein effizientes Alarmmanagement von zentraler Bedeutung. Dabei stellt eine sogenannte Meldefolgeanzeige ein besonders hilfreiches Werkzeug dar. Hierbei handelt es sich um eine (tabellarische) Auflistung von Alarmen, die nach gewissen Kriterien sortiert werden (z.B. nach ihrem Zeitstempel). Neben aktuellen Alarmen können dabei auch historische Alarme dargestellt werden. Hierfür wird in der Regel ein bestimmter Zeitbereich vorgegeben.

Beispielsweise können über einen Zeitraum von einer Stunde hinweg Alarme aus einem Archiv in die Meldefolgeanzeige geladen werden. Dabei kann es sich in großen technischen Anlagen leicht um Hunderte Alarme handeln, die jedoch nicht alle gleichzeitig einem Operator dargestellt werden können. Oftmals ist der visualisierte Bereich der Meldefolgeanzeige im Gegenteil deutlich kleiner als der tatsächlich betrachtete Bereich der Meldefolgeanzeige. Der Operator muss daher durch die nicht visualisierten Bereiche hindurch navigieren.

Gerade beim Auftreten einer Alarmhäufung (auch als Alarmschwall bezeichnet) stößt der Operator hier an seine Grenzen.

Bei einer solchen Alarmhäufung existiert in der Regel ein Ausgangsalarm (der sogenannte Auslöseralarm), der zahlreiche weitere Alarme nach sich bringt. Beispielsweise kann ein festsitzendes Ventil einen solchen Ausgangsalarm auslösen. In Folge dessen geben auch zahlreiche dem Ventil zugeordnete Sensoren (Temperatur, Durchfluss) oder Aktoren Folgealarme innerhalb einer kurzen Zeitspanne aus. Der Operator steht nun vor der Herausforderung, aus einer unübersichtlich großen Menge an Alarmmeldungen den Ausgangsalarm zu identifizieren, um die eigentliche Ursache für die Alarmsituation zu erkennen und entsprechende Maßnahmen einleiten zu können.

Die Suche nach der Ursache kann zusätzlich dadurch erschwert werden, dass weitere Alarme in der Meldefolgeanzeige enthalten sind, die nichts mit der speziellen Alarmsituation zu tun haben. Um die störenden Alarme bei der Suche auszublenden, können spezielle Filter verwendet werden, die aber erst händisch durch den Operator festgelegt werden müssen und daher einen unnötigen Zeitaufwand mit sich bringen. Umgekehrt kann eine Alarmhäufung die Suche nach anderen, unabhängigen Alarmereignissen erschweren, weil einzelne Alarme von der Masse der Alarmhäufung überdeckt werden.

Generell stellt eine Alarmhäufung für ein Leitsystem einer technischen Anlage ein belastendes Element dar (hinsichtlich Zeit und sonstiger Ressourcen), weshalb die Ursache für die Alarmhäufung möglichst schnell identifiziert werden muss.

In der DE 10 2016 108 197 A1 ist ein Verfahren und eine Vorrichtung zur Ermittlung von Fehlerursachen von Alarmmustern in Prozessleitsystemen offenbart.

Die US 2013/0099916 A1 zeigt ein Prozessleitsystem, welches eine Anzeige von Prozessalarmen an einen Benutzer des Prozessleitsystems offenbart.

Der Erfindung liegt die Aufgabe zugrunde, ein verbessertes Verfahren anzugeben, das ein effizientes und schnelles Auffinden eines Ursprungs einer Häufung von Alarmmeldungen in einem Leitsystem einer technischen Anlage ermöglicht.

Diese Aufgabe wird gelöst durch ein Verfahren zur Identifizierung einer Ausgangsalarmmeldung einer Alarmmeldungshäufung in einem Leitsystem einer technischen Anlage mit den Merkmalen des Anspruchs 1. Außerdem wird die Aufgabe gelöst durch ein Leitsystem einer technischen Anlage gemäß Anspruch 4. Vorteilhafte Weiterbildungen ergeben sich aus den abhängigen Ansprüchen.

Ein Verfahren der eingangs beschriebenen Art löst die Aufgabe erfindungsgemäß mittels der folgenden Verfahrensschritte:
a) Erfassen durch den Operator Station Server von in dem Leitsystem der technischen Anlage aufkommenden Alarmmeldungen und Hinterlegen der Alarmmeldungen in einem Speicher;
b) Festlegen eines bestimmten Zeitbereichs durch einen Bediener des Bediengerätes des Leitsystems;
c) Bestimmung durch den Operator Station Server von einzelnen Zeitpunkten innerhalb des Zeitbereichs, an denen Ausgangsalarmmeldungen, die in der technischen Anlage aufkommen, entweder aktiviert oder deaktiviert werden, wobei eine Ausgangsalarmmeldung eine Alarmmeldung darstellt, die eine Mehrzahl von weiteren Alarmmeldungen nach sich bringt, und wobei
d) im Rahmen der Bestimmung der Zeitpunkte folgende Verfahrensschritte durch den Operator Station Server durchgeführt werden:
   i) Aufsummierung einer Anzahl aller aktiven Alarmmeldungen in dem Zeitbereich und Ermittlung einer dazugehörigen Summenfunktion, wobei die Summenfunktion darüber Aufschluss gibt, welche Menge an Alarmmeldungen zu welchem Zeitpunkt innerhalb des betrachteten Zeitbereichs aktiv ist;
   ii) Identifizierung von lokalen Minima des Verlaufs der Summenfunktion;
   iii) Übertragung der Zeitpunkte der identifizierten lokalen Minima an das Bediengerät;
e) Automatisierte Darbietung der identifizierten lokalen Minima und der Alarmmeldungen an einen Bediener der technischen Anlage mittels des Bediengeräts,
f) wobei der Bediener sich die unmittelbare Umgebung der einzelnen lokalen Minima, wo sich die Ausgangsalarmmeldungen potenziell befinden, anzeigen lassen kann.

Unter einem Leitsystem wird im vorliegenden Kontext ein computergestütztes technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Eine technische Anlage ist eine Mehrzahl an Maschinen, Geräten, Applikationen und dergleichen, die in einem funktionalen und oftmals auch räumlichen Zusammenhang zueinanderstehen. Mittels der Anlage werden in (groß-)technischen Dimensionen Produkte, Komponenten und dergleichen erzeugt bzw. gefertigt.

Bei einer Alarmmeldung kann es sich beispielsweise um eine Meldung eines Geräts der technischen Anlage handeln, die einen fehlerhaften Zustand des Geräts als Information beinhaltet.

Bei dem Zeitbereich kann es sich prinzipiell um einen beliebigen Zeitbereich handeln. Aus Praktikabilitätsgründen ist ein Zeitbereich bevorzugt, der kleiner ist als eine gesamte Betriebsdauer der technischen Anlage. Dabei können Zeitbereiche gewählt werden, deren Anfang und Ende in der Vergangenheit liegen. Das Ende kann aber auch so gewählt werden, dass es bei einem aktuellen Zeitpunkt liegt, an dem das Verfahren durchgeführt wird.

Der bestimmte Zeitbereich kann vorteilhafterweise von dem Bediengerät vorgegeben werden, das entsprechend dazu ausgebildet ist.

Unter einer Ausgangsalarmmeldung wird eine Alarmmeldung verstanden, die eine Vielzahl an nachfolgenden weiteren Alarmmeldungen und/oder anderen Meldungstypen nach sich zieht. Beispielsweise kann ein festsitzendes Ventil eine solche Ausgangsalarmmeldung auslösen. In Folge dessen geben auch zahlreiche dem Ventil zugeordnete Sensoren (Temperatur, Durchfluss) oder Aktoren Folgealarmmeldungen innerhalb einer kurzen Zeitspanne aus.

Die erfindungsgemäße Idee liegt nun darin, dass in dem zuvor festgelegten Zeitbereich wenigstens ein Zeitpunkt ermittelt wird, dessen Zeitstempel eine Alarmmeldung trägt, die eine Ausgangsalarmmeldung darstellt. Die ermittelten Zeitpunkte werden anschließend an ein Bediengerät übertragen, mittels dessen ein Bediener der technischen Anlage die wenigstens eine Ausgangsalarmmeldung schnell und effizient identifizieren und entsprechende Maßnahmen einleiten kann.

Die ermittelte Summenfunktion gibt Aufschluss darüber, welche Menge an Alarmmeldungen zu welchem Zeitpunkt innerhalb des betrachteten Zeitbereichs aktiv ist. Es kann vorkommen, dass Alarmmeldungen nur zu Beginn des Zeitbereichs aktiv sind und dann ab einem bestimmten Zeitpunkt hinfällig sind. Die Summenfunktion bildet diesen Fall über eine entsprechende Verringerung des Summenwerts ab.

In einem darauffolgenden Schritt werden mittels an sich bekannten mathematischen Methoden die lokalen Minima dieser Summenfunktion ermittelt. Es wurde erkannt, dass sich die Ausgangsalarmmeldungen regelmäßig im Bereich dieser Minima befinden und sich daher als entsprechende Indikatoren eignen.

Das Bilden der Summenfunktion, das Auffinden der Minima und das Bereitstellen der Minima für den Bediener bzw. das Bediengerät können vollautomatisiert erfolgen, was eine enorme Zeitersparnis gegenüber einem händischen Auffinden der Ausgangsalarmmeldungen darstellt.

Vorteilhafterweise werden die ermittelten lokalen Minima anhand eines bestimmten Kriteriums sortiert, insbesondere eines betragsmäßigen Werts, an das Bediengerät übertragen. Durch die Sortierung der Minima wird es einem Bediener ermöglicht, zielgerichtet zu einem bestimmten lokalen Minimum zu navigieren, beispielsweise zu dem Minimum, das den kleinsten Wert aufweist.

Besonders bevorzugt werden einem Bediener der technischen Anlage mittels des Bediengeräts automatisiert die identifizierten lokalen Minima bzw. Alarmmeldungen dargeboten, wobei die Alarmmeldungen in einem bestimmten Bereich um die lokalen Minima herum in der technischen Anlage angefallen sind.

Die zuvor erläuterte Aufgabe wird auch durch ein Leitsystem einer technischen Anlage gelöst, das einen Operator Station Server (5) und ein Bediengerät (6) aufweist, die dazu ausgebildet sind, ein Verfahren wie zuvor erläutert durchzuführen. Dabei wird unter einem "Operator Station Server" vorliegend ein Server verstanden, der zentral Daten eines Bedien- und Beobachtungssystems sowie in der Regel Alarm- und Messwertarchive eines Leitsystems einer technischen Anlage erfasst und Benutzern bzw. Bedienern zur Verfügung stellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

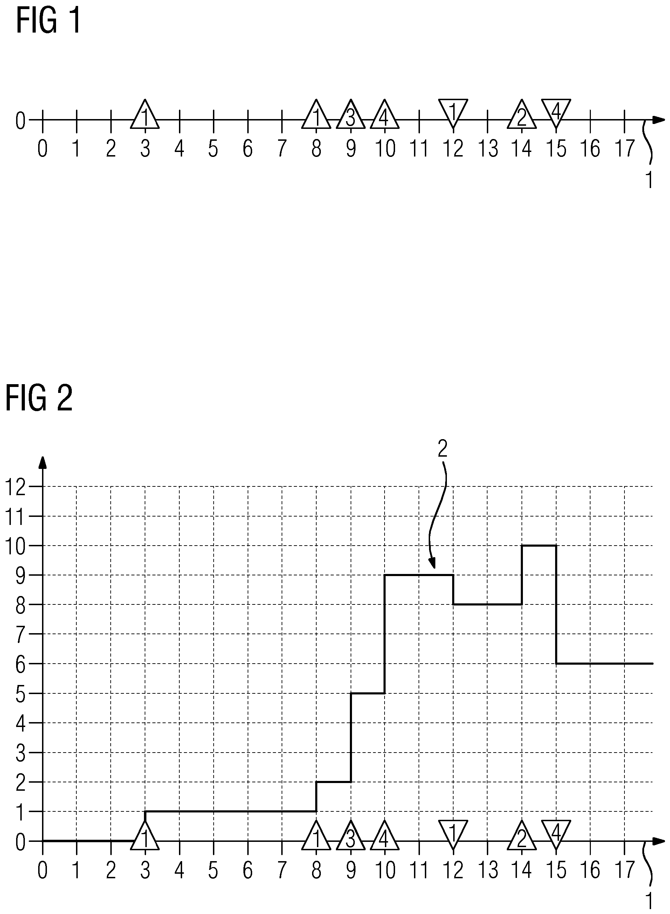

In FIG 1 ist ein Zeitbereich 1 dargestellt. Der Zeitbereich 1 umfasst 17 einzelne Zeitpunkte, an denen Alarmmeldungen, die in einem Leitsystem einer technischen Anlage aufkommen, entweder aktiviert (Dreieckssymbol mit Spitze nach oben) oder deaktiviert werden (Dreieckssymbol mit Spitze nach unten). Die Zahlen in den Dreieckssymbolen stehen dabei für die Anzahl der neu hinzugekommenen aktiven bzw. deaktivierten Alarmmeldungen.

Im Rahmen einer Evaluierung dieser Alarmmeldungen wird in einem ersten Schritt eine Summenfunktion 2 ermittelt. Die erfindungsgemäß resultierende Summenfunktion 2 ist in FIG 2 dargestellt. Die Summenfunktion 2 bildet die Anzahl der zu einem bestimmten Zeitpunkt innerhalb des bestimmten Zeitbereichs 1 aktiven Alarmmeldungen ab.

Ausgehend von der Summenfunktion 2 werden in einem darauffolgenden Schritt die lokalen Minima 3a, 3b, 3c des Verlaufs der Summenfunktion ermittelt. Dabei liegt die Erkenntnis zugrunde, dass sich Ausgangsalarmmeldungen, also die initialen Alarmmeldungen einer Häufung von Alarmmeldungen oder dergleichen, potenziell in der Umgebung dieser lokalen Minima 3a, 3b, 3c befinden.

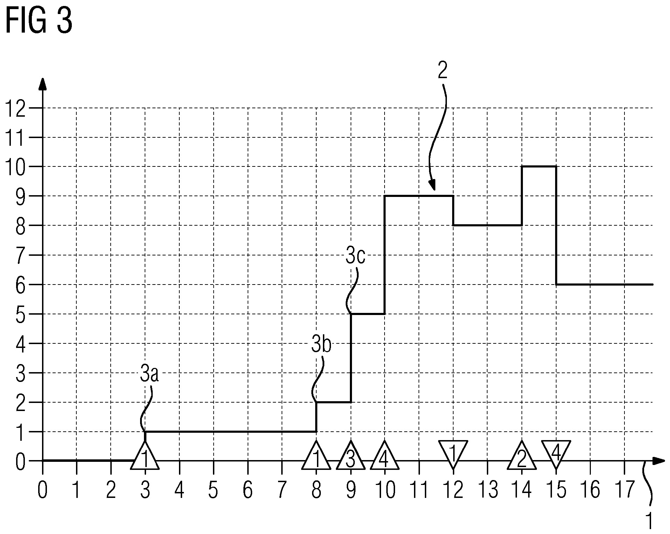

Die lokalen Minima 3a, 3b, 3c werden anschließend anhand des betragsmäßigen Werts des jeweiligen lokalen Minimums 3a, 3b, 3c sortiert, was in FIG 3 dargestellt ist. Der Zahlenwert in den Kreissymbolen der lokalen Minima 3a, 3b, 3c indiziert dabei eine Sortierreihenfolge der lokalen Minima 3a, 3b, 3c. Die lokalen Minima 3a, 3b, 3c bzw. die korrespondierenden Zeitpunkte werden an ein Bediengerät der technischen Anlage übertragen. Mittels des Bediengeräts kann ein Bediener bzw. Operator zielgerichtet die Bereiche innerhalb des Zeitbereichs 1 ermitteln, die für das Ergreifen entsprechender Maßnahmen im Kontext einer Alarmmeldungshäufung von Relevanz sind.

Eine Anzeige des Bediengeräts kann derart gestaltet sein, dass ein visualisierter Teil-Zeitbereich des umfassenderen Zeitbereichs 1 eine unmittelbare Umgebung der einzelnen lokalen Minima anzeigt. Vorteilhafterweise wird beispielsweise ein Bereich von X-10 Sekunden bis X+10 Sekunden angezeigt, wobei ein identifiziertes lokales Minimum 3a, 3b, 3c den Zeitstempel X aufweist. Das lokale Minimum wird demnach "in der Mitte der Anzeige" des Bediengeräts visualisiert.

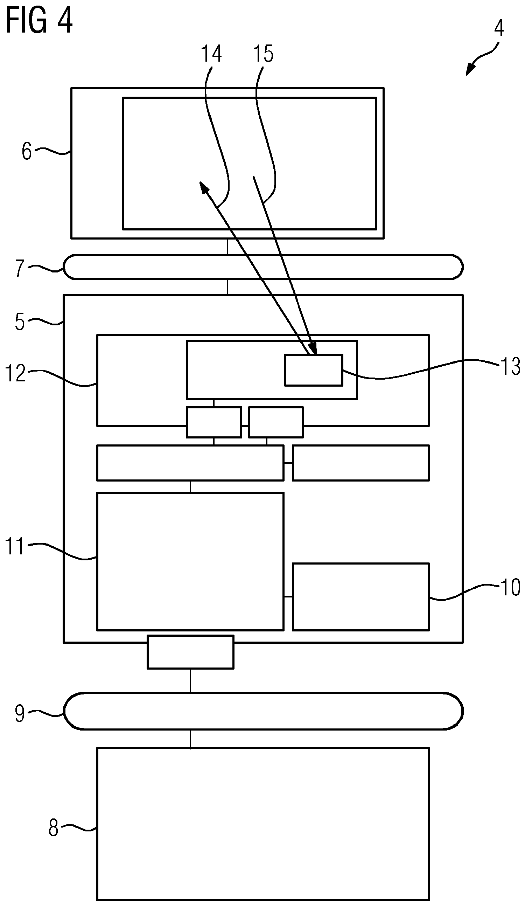

In FIG 4 ist die Architektur eines Leitsystems 4 einer als verfahrenstechnische Anlage ausgebildeten technischen Anlage schematisch dargestellt. Das Leitsystem 4 weist einen Server eines Bediensystems bzw. einen Operator Station Server 5 auf.

Ein Bediengerät bzw. Client 6 steht mittels eines Terminalbusses 7 mit dem Operator Station Server 5 in Verbindung. Der Terminalbus 7 kann, ohne sich darauf zu beschränken, beispielsweise als Industrial Ethernet ausgebildet sein.

An den Operator System Server 5 ist ein Gerät 8 mittels eines Anlagenbusses 9 angeschlossen. Bei dem angeschlossenen Gerät 8 kann es sich dabei alternativ auch um eine Applikation, insbesondere Webapplikation, handeln. Im Rahmen der Erfindung kann eine beliebige Zahl an Geräten und/oder Applikationen an den Operator System Server 5 angeschlossen sein. Der Anlagenbus 9 kann, ohne sich darauf zu beschränken, beispielsweise als Industrial Ethernet ausgebildet sein. Das Gerät 8 kann wiederum mit einer beliebigen Anzahl an Subsystemen (nicht dargestellt) verbunden sein.

Der Operator Station Server 5 umfasst ein Prozessdatenarchiv 10, einen Prozessabbilddienst 11 und einen Visualisierungsdienst 12. In dem Prozessdatenarchiv 10 sind unter anderem (Alarm-)Meldungen abrufbar hinterlegt, die mittels des Prozessabbilddienstes 11 von den angeschlossenen Geräten 8 empfangen wurden. Mittels des Visualisierungsdienstes 12 kann eine Übertragung von Daten an das Bediengerät 6 bzw. den Client 6 erfolgen. Das zuvor erläuterte erfindungsgemäße Verfahren wird mittels eines "Alarm Flood Evaluation Services" 13 durchgeführt, der Teil des Visualisierungsdienstes 12 des Operator Station Servers 5 ist. Der "Alarm Flood Evaluation Services" 13 stellt dabei über einen Ausgabestrom 14 die entsprechend verarbeiteten Daten einem Nutzer des Bediengeräts 6 bereit. Über einen Eingabestrom 15 kann der Nutzer in umgekehrter Richtung auch Befehle an den "Alarm Flood Evaluation Services" 13 senden, um diesen seinen Anforderungen entsprechend zu konfigurieren.

## Patentansprüche

1. Verfahren zur Identifizierung einer Ausgangsalarmmeldung einer Alarmmeldungshäufung in einem Leitsystem (4) einer technischen Anlage, wobei das Leitsystem (4) einen Operator Station Server (5) und ein Bediengerät (6) aufweist, das Verfahren umfassend:
a) Erfassen durch den Operator Station Server (5) von in dem Leitsystem (4) der technischen Anlage aufkommenden Alarmmeldungen und Hinterlegen der Alarmmeldungen in einem Speicher (10);
b) Festlegen eines bestimmten Zeitbereichs (1) durch einen Bediener des Bediengerätes (6) des Leitsystems (4);
c) Bestimmung durch den Operator Station Server (5) von einzelnen Zeitpunkten innerhalb des Zeitbereichs (1), an denen Ausgangsalarmmeldungen, die in der technischen Anlage aufkommen, entweder aktiviert oder deaktiviert werden, wobei eine Ausgangsalarmmeldung eine Alarmmeldung darstellt, die eine Mehrzahl von weiteren Alarmmeldungen nach sich bringt, und wobei
d) im Rahmen der Bestimmung der Zeitpunkte folgende Verfahrensschritte durch den Operator Station Server (5) durchgeführt werden:
i) Aufsummierung einer Anzahl aller aktiven Alarmmeldungen in dem Zeitbereich (1) und Ermittlung einer dazugehörigen Summenfunktion (2), wobei die Summenfunktion (2) darüber Aufschluss gibt, welche Menge an Alarmmeldungen zu welchem Zeitpunkt innerhalb des betrachteten Zeitbereichs (1) aktiv ist;
ii) Identifizierung von lokalen Minima (3a, 3b, 3c) des Verlaufs der Summenfunktion;
iii) Übertragung der Zeitpunkte der identifizierten lokalen Minima (3a, 3b, 3c) an das Bediengerät (6);
e) Automatisierte Darbietung der identifizierten lokalen Minima (3a, 3b, 3c) und der Alarmmeldungen an einen Bediener der technischen Anlage mittels des Bediengeräts (6),
f) wobei der Bediener sich die unmittelbare Umgebung der einzelnen lokalen Minima (3a, 3b, 3c), wo sich die Ausgangsalarmmeldungen potenziell befinden, anzeigen lassen kann.

2. Verfahren nach Anspruch 1, bei dem die lokalen Minima (3a, 3b, 3c) anhand eines bestimmten Kriteriums, insbesondere eines betragsmäßigen Werts, sortiert an das Bediengerät (6) übertragen werden.

3. Verfahren nach einem der vorangegangenen Ansprüche, bei dem das Bediengerät (6) dazu ausgebildet ist, den bestimmten Zeitbereich (1) gemäß dem Verfahrensschritt b vorzugeben.

4. Leitsystem (4) einer technischen Anlage, wobei das Leitsystem (4) einen Operator Station Server (5) und ein Bediengerät (6) aufweist, die dazu ausgebildet sind, ein Verfahren gemäß einem der Ansprüche 1 bis 3 durchzuführen.

## Claims

1. Method for identifying an output alarm message of an alarm message cluster in a management system (4) of a technical installation, wherein the management system (4) has an operator station server (5) and a control device (6), the method comprising:
a) detecting, by means of the operator station server (5), alarm messages arriving in the management system (4) of the technical installation and storing the alarm messages in a storage device (10);
b) defining, by means of an operator of the control device (6) of the management system (4), a specific time range (1);
c) determining, by means of the operator station server (5), individual time instants within the time range (1), at which output alarm messages, which arrive in the technical installation, are either activated or deactivated, wherein an output alarm message represents an alarm message which brings with it a plurality of further alarm messages, and wherein
d) within the scope of determining the time instants, the following method steps are carried out by the operator station server (5):
i) totalling a number of all active alarm messages in the time range (1) and determining an associated totalling function (2), wherein the totalling function (2) provides information about which quantity of alarm messages is active at which time instant within the observed time range (1);
ii) identifying local minima (3a, 3b, 3c) of the course of the totalling function;
iii) transmitting the time instants of the identified local minima (3a, 3b, 3c) to the control device (6);
e) presenting the identified local minima (3a,3b, 3c) and alarm messages to an operator of the technical installation in an automated manner by means of the control device (6),
f) wherein the operator may view the immediate vicinity of the individual local minima (3a, 3b, 3c), where the output alarm messages are potentially located.

2. Method according to claim 1, in which the local minima (3a, 3b, 3c) are transmitted sorted on the basis of a specific criterion, in particular a value according to amount, to the control device (6).

3. Method according to one of the preceding claims, in which the control device (6) is embodied to predetermine the specific time range (1) according to the method step b.

4. Management system (4) of a technical installation, wherein the management system (4) has an operator station server (5) and a control device (6) which are embodied to carry out a method according to one of claims 1 to 3.

## Revendications

1. Procédé d'identification d'un message d'alerte initial d'une accumulation de messages d'alerte dans un système (4) de conduite d'une installation technique, dans lequel le système (4) de conduite comporte un operator station server (5) et un appareil (6) de service, le procédé comprenant :
a) la détection par l'operator station server (5) de messages d'alerte arrivant dans le système (4) de conduite de l'installation technique et la mise des messages d'alerte dans une mémoire (10) ;
b) la fixation d'un laps de temps (1) défini par un opérateur de l'appareil (6) de service du système (4) de conduite ;
c) la détermination par l'operator station server (5) de divers points dans le temps dans le laps (1) de temps, où des messages d'alertes initiaux, qui arrivent dans l'installation technique, ou bien sont activés ou bien sont désactivés, dans lequel un message d'alerte initial représente un message d'alerte, qui emporte avec lui une pluralité d'autres messages d'alerte, et dans lequel
d) dans le cadre de la détermination des points dans le temps, on effectue les stades de procédé suivants par l'operator station server (5) :
i) sommation d'un nombre de tous les messages d'alerte actifs dans le laps de temps (1) et détermination d'une fonction (2) somme qui lui appartient, dans lequel la fonction (2) somme donne des éclaircissements sur quelle quantité de messages d'alerte à quels points dans le temps, dans le laps de temps (1) considéré, est active ;
ii) identification de minimums (3a, 3b, 3c) locaux de la courbe de la fonction somme ;
iii)transmission des points dans le temps des minimums (3a, 3b, 3c) locaux identifiés à l'appareil (6) de service ;
e) la présentation automatisée des minimums (3a, 3b, 3c) locaux identifiés et des messages d'alerte à un opérateur de l'installation technique au moyen de l'appareil (6) de service,
f) dans lequel l'opérateur peut se faire indiquer l'environnement direct des divers minimums (3a, 3b, 3c) locaux, où se trouvent potentiellement les messages d'alerte initiaux.

2. Procédé suivant la revendication 1, dans lequel on transmet, d'une manière triée, à l'appareil (6) de service, les minimums (3a, 3b, 3c) locaux, à l'aide d'un critère déterminé, notamment d'une valeur absolue.

3. Procédé suivant l'une des revendications précédentes, dans lequel l'appareil (6) de service est constitué pour prescrire le laps de temps (1) défini suivant le stade b du procédé.

4. Système (4) de conduite d'une installation technique, dans lequel le système (4) de conduite a un operator station server (5) et un appareil (6) de service, qui sont constitués pour effectuer un procédé suivant l'une des revendications 1 à 3.
